# EUROPÄISCHE PATENTANMELDUNG

(11) **EP 4 729 220 A1**
(43) Veröffentlichungstag der Anmeldung: **22.04.2026**
(21) Anmeldenummer: 25209908.0
(22) Anmeldetag: 20.10.2025
(51) Int. Cl.: B23D 35/00, B26D 7/26

(54) **SCHNEIDVORRICHTUNG ZUM SCHNEIDEN VON FLACHMATERIAL**

(30) Priorität: 21.10.2024 DE 102024130617
(71) Anmelder: EVOBEND GmbH, 83404 Ainring (DE)
(72) Erfinder: Duscher, Nikolaus Franz, 5101 Bergheim bei Salzburg (AT)
(74) Vertreter: Thum, Bernhard

(57) **Zusammenfassung**

Eine erfindungsgemäße Schneidvorrichtung (10) zum Schneiden von Flachmaterial, wie beispielsweise Blech, umfasst:

- eine Messerwelle (12), an der wenigstens ein Rundmesser (14) befestigbar ist;

- eine Positionierungsvorrichtung (16), die dazu eingerichtet ist, das wenigstens eine Rundmesser (14) in einem gelösten Zustand entlang einer Längsachse (LA1) der Messerwelle (12) zu verschieben und in einer vorgesehenen Position an der Messerwelle (12) reversibel und kraftübertragend zu fixieren, wobei die Positionierungsvorrichtung (16) wenigstens einen Effektor (18) aufweist, der dazu eingerichtet ist, ein Spannmittel (20) des wenigstens einen Rundmessers (14) zu betätigen.

Bei dieser Schneidvorrichtung ist vorgesehen, dass der Effektor (18) zum Betätigen des Spannmittels (20) entlang einer Bewegungsachse (BA1) bewegbar ist, die windschief zu der Längsachse (LA1) der Messerwelle (12) verläuft.

## Beschreibung

Die vorliegende Erfindung betrifft eine Schneidvorrichtung zum Schneiden von Flachmaterial, wie beispielsweise Blech, umfassend:
- eine Messerwelle, an der wenigstens ein Rundmesser befestigbar ist;
- eine Positionierungsvorrichtung, die dazu eingerichtet ist, das wenigstens eine Rundmesser in einem gelösten Zustand entlang einer Längsachse der Messerwelle zu verschieben und in einer vorgesehenen Position an der Messerwelle reversibel und kraftübertragend zu fixieren, wobei die Positionierungsvorrichtung wenigstens einen Effektor aufweist, der dazu eingerichtet ist, ein Spannmittel des wenigstens einen Rundmessers zu betätigen.

Derartige Schneidvorrichtungen sind aus dem Stand der Technik der Blechbearbeitung bekannt. So ist es allgemein üblich, derartigen Schneidvorrichtungen Flachmaterial zuzuführen, wie beispielsweise Blech, um diese in Längsrichtung zu schneiden.

Herkömmliche Schneidvorrichtungen zum Längsschneiden von Flachmaterial weisen in der Regel eine oder mehrere rotierbare Messerwellen auf, auf denen Rollenmesser angeordnet sind. Um verschiedene Schnittbreiten zu realisieren und so auf unterschiedliche Blechformate einzugehen, kann häufig die Positionierung der Messer angepasst werden. Eine entsprechende Schneidvorrichtung ist beispielsweise in dem deutschen Gebrauchsmuster DE 203 06 757 U1 beschrieben. Gemäß der Lehre dieses Gebrauchsmusters wird eine Einrichtung zum Längsschneiden von Materialbahnen bereitgestellt, die eine Stelleinheit umfasst, welche eine axiale Verstellung von Rollenmessern ermöglicht. Die Stelleinheit ist entlang der Messerwellen verfahrbar und wird durch eine Positioniereinheit gesteuert, sodass die Rollenmesser automatisch bzw. ohne manuelle Anpassung in vorgegebenen Positionen eingestellt werden können. Zum Positionieren der Rollenmesser weist die Einrichtung eine Greifeinheit sowie eine Schraubeinheit auf. Die Greifvorrichtung erfasst die Rollenmesser und bewegt sie in die gewünschte Position. Nach der Positionierung übernimmt die Schraubeinheit die Fixierung der Rollenmesser.

Der Platzbedarf für solche Stelleinheiten ist erheblich und stellt eine große Herausforderung für Planung und den Betrieb dar. Herkömmliche Stelleinheiten benötigen viel Bauraum, was die Anordnung innerhalb der Produktionsumgebung einschränkt. Insbesondere in bestehenden Fabriklayouts kann dies zu Schwierigkeiten bei der Integration neuer Anlagenkomponenten führen, da möglicherweise geeignete Flächen fehlen.

Der große Platzbedarf verursacht zudem höhere Kosten für die notwendige Infrastruktur. Darüber hinaus erschweren die baulichen Gegebenheiten und die meist schlechte Zugänglichkeit auch die Wartung und Inspektion dieser Maschinen, was die Effizienz der Wartungsarbeiten verringert und potenziell zu längeren Ausfallzeiten führt.

Es ist eine Aufgabe der vorliegenden Erfindung, eine Schneidvorrichtung eingangs bezeichneter Art mit verbesserten Eigenschaften bereitzustellen. Darüber hinaus besteht eine weitere Aufgabe der vorliegenden Erfindung darin, eine Schneidvorrichtung zum Schneiden von Flachmaterial bereitzustellen, die einen geringen Platzbedarf, sowie eine hohe Nutzer- und Wartungsfreundlichkeit aufweist.

Diese Aufgaben werden erfindungsgemäß durch eine Schneidvorrichtung der eingangs genannten Art gelöst, wobei der Effektor zum Betätigen des Spannmittels entlang einer Bewegungsachse bewegbar ist, die windschief zu der Längsachse der Messerwelle verläuft.

Die Erfindung sieht also vor, dass der Effektor entlang einer Bewegungsachse bewegbar ist, welche die Längsachse oder - anders ausgedrückt - die Symmetrieachse in Längsrichtung bzw. die Rotationsachse der Messerwelle weder schneidet noch parallel zu dieser verläuft. Durch eine derartige Ausgestaltung kann eine vorteilhaft weiterentwickelte Schneidvorrichtung bereitgestellt werden. Aufgrund der windschiefen Orientierung der Bewegungsachse des Effektors relativ zu der Längsachse der Messerwelle, beansprucht der Effektor nicht den gesamten Durchmesser der Messerwelle, wodurch eine besonders kompakte Bauweise der Schneidvorrichtung realisiert werden kann, die den Platzbedarf erheblich reduziert. Dies ermöglicht eine flexible und/oder bauraumsparende Integration der Schneidvorrichtung in verschiedene Arbeitsumgebungen. Zudem zeichnet sich die erfindungsgemäße Schneidvorrichtung durch benutzerfreundliche Wartungsprozesse aus, die den Aufwand für Instandhaltungsmaßnahmen erheblich reduzieren und somit Stillstandszeiten minimieren.

Unter einem Spannmittel soll im Rahmen der vorliegenden Erfindung insbesondere eine Vorrichtung verstanden werden, die dazu eingerichtet ist, ein Rundmesser vor, während und/oder nach einer Bearbeitung von Flachmaterial, sicher und präzise an der Messerwelle zu fixieren. Das Spannmittel kann jegliche einem Fachmann als vorteilhaft erscheinende Vorrichtungen und/oder Komponenten umfassen, um die Position und Stabilität des Rundmessers an der Messerwelle zu gewährleisten.

Bei einem "Effektor" soll es sich insbesondere um eine Teilkomponente und/oder Teilabschnitt der Positionierungsvorrichtung handeln. Der Effektor kann dazu eingerichtet sein, zumindest zeitweise physischen Kontakt mit einem und/oder mehreren Zielobjekten, insbesondere in Form von Spannmitteln, herzustellen und/oder mit diesen zu interagieren. Der Effektor kann je nach Anforderungsbereich und/oder Aufgabe unterschiedlich ausgebildet sein. Insbesondere kann der Effektor dazu eingerichtet sein, ein Spannmittel festzuziehen und/oder zu lösen.

Gemäß einer Weiterbildung kann die Positionierungsvorrichtung eine Greifeinheit aufweisen, die mit dem wenigstens einen Rundmesser bewegungsübertragend koppelbar ist. Die Greifeinheit kann dabei eine von dem Effektor räumlich getrennte Einheit bilden und/oder eine separate Aktuatorik aufweisen. Die Greifeinheit kann derart ausgestaltet sein, dass diese eine Außenumfangsfläche des Rundmessers zumindest abschnittsweise sicher umschließt und/oder zumindest an mehreren Kontaktpunkten bzw. Kontaktbereichen greift, um eine stabile Haltekraft zu gewährleisten. Die Greifeinheit kann ein Greifelement umfassen, das dazu eingerichtet ist, sich radial auf zumindest einen Abschnitt einer Außenfläche des Rundmessers zubewegen, um es zumindest abschnittsweise gleichmäßig zu umgreifen. Das Greifelement kann eine passende Kontur haben, um die Geometrie des Rundmessers zu berücksichtigen und ein Abrutschen während einer Bewegung bzw. eines Positionierungsvorgangs zu verhindern. Zusätzlich kann eine rutschfeste Beschichtung auf dem Greifelement für einen zuverlässigen Formschluss und/oder besseren Halt vor, während und/oder nach einem Positionierungsvorgang des Rundmessers sorgen.

Der Effektor und die Greifeinheit können auf einer Ebene der
Positionierungsvorrichtung angeordnet sein, die sich im wesentlichen senkrecht zu der Längsachse der Messerwelle erstreckt. Auf diese Weise kann Bauraum besonders effizient genutzt werden und eine hohe Kompaktheit der Schneidvorrichtung erreicht werden.

Gemäß einer alternativen Ausführungsform kann der wenigstens eine Effektor mit dem wenigstens einen Rundmesser bewegungsübertragend koppelbar sein. In anderen Worten kann der Effektor in einem Zustand, in dem er mit dem Rundmesser gekoppelt ist, das Rundmesser entlang der Messerwelle bewegen und in eine beliebige Position verfahren. In einer derartigen Ausgestaltung kann der Effektor somit nicht nur als Aktuator zum Betätigen des Spannmittels fungieren, sondern auch als eine Art Mitnehmer, der das Rundmesser auch axial bewegen kann, dienen. Der Effektor gemäß dieser Ausführungsform ist also multifunktional und macht eine zusätzliche Greifeinheit überflüssig. Vorzugsweise kann der Effektor in einer Ebene der Positionierungsvorrichtung angeordnet sein, die sich im wesentlichen senkrecht zu der Längsachse der Messerwelle erstreckt. Ein derartiger multifunktionaler Effektor kann den benötigten Bauraum der Schneidvorrichtung sowie deren Herstellungskosten maßgeblich reduzieren, da er mehrere Funktionen in einem einzigen Effektor vereint. Dadurch entfällt der Platzbedarf für zusätzliche Maschinenkomponenten, und die Schneidvorrichtung kann kompakter gebaut werden. Zudem werden Bewegungs- und Umrüstzeiten verkürzt, da der Effektor verschiedene Aufgaben ohne Werkzeugwechsel durchführen kann. Dies steigert die Effizienz und Flexibilität der Schneidvorrichtung.

In einer Ausführungsvariante kann die Positionierungsvorrichtung ein Hub-Dreh-Modul umfassen, das dazu eingerichtet ist, den Effektor entlang der Bewegungsachse zu bewegen und um die Bewegungsachse zu rotieren. Das Hub-Dreh-Modul kann eine Hub-Dreh-Spindel umfassen. Ferner kann das Hub-Dreh-Modul eine Kugelgewindemutter sowie eine Drehmomentkugelbuchse, die jeweils über einen Riemenantrieb bewegungsübertragend Koppelbar sind, umfassen. Ein distaler Endabschnitt der Hub-Dreh-Spindel, also ein Endabschnitt der Hub-Dreh-Spindel, der in einem das Spannmittel betätigenden Zustand dem Spannmittel zugewandt ist, kann als Effektor ausgebildet sein. Alternativ kann der distale Endabschnitt der Dreh-Hubspindel mit einem Effektor bewegungs- und/oder kraftübertragend koppelbar sein.

Ein derartiges Hub-Dreh-Modul bietet den Vorteil, dass es sowohl lineare als auch rotatorische Bewegungen in einem kompakten Bauteil vereint. Dies ermöglicht eine präzise und/oder synchrone Steuerung beider Bewegungen. Da die Hub- und Drehbewegung durch eine einzige Spindelmechanik realisiert wird, reduziert sich der Bedarf an zusätzlichen Aktuatoren und Bauteilen, was zu einer Platzersparnis und geringeren Wartungskosten führt. Zudem verbessert die Integration beider Bewegungsarten die Prozessgeschwindigkeit.

Um die Positionierungsvorrichtung bzw. die Greifeinheit zuverlässig mit dem Rundmesser zu koppeln, kann die Greifeinheit eine Stellvorrichtung, wie beispielsweise, einen Pneumatikzylinder , einen Hydraulikzylinder und/oder ein elektrisches Stellmodul, umfassen, das mit der Greifeinheit bewegungsübertragend gekoppelt bzw. koppelbar ist. Die Stellvorrichtung kann eine Kolbenstange umfassen, die vorzugsweise linear entlang einer Achse, die senkrecht zur Längsachse der Messerwelle verläuft, oszillatorisch beweglich ist. Die Stellvorrichtung kann eine präzise, zuverlässige und/oder schnelle Vorwärts- bzw. Rückwärtsbewegung, des Greifelements zum Koppeln und/oder Entkoppeln des Rundmessers gewährleisten.

In einigen Ausführungsvarianten kann die Schneidvorrichtung, ferner das wenigstens eine Rundmesser umfassen. Das Rundmesser bildet einen eigenständigen Erfindungsaspekt, der auch unabhängig von der Schneidvorrichtung oder anderen damit im Zusammenhang beschriebenen Merkmalen vorgesehen sein kann.

Das Rundmesser kann einen Messerhalter sowie eine Rundklinge umfassen, die verliersicher mit dem Messerhalter koppelbar und/oder gekoppelt ist. Ferner ist denkbar, dass die Rundklinge mehrteilig ausgebildet ist. Mehrteilige Rundklingen ermöglichen eine vereinfachte Montage und/oder Demontage, was insbesondere die Wartung und den Austausch der Rundmesser erheblich erleichtert. So können beispielsweise während einer Wartung die Messerhalter stets auf einer in einer Maschine eingebauten Welle verweilen und lediglich die Rundklingen ausgetauscht werden, ohne auch die Wellen und/oder die Messerhalter demontieren zu müssen. Dadurch können Ausfallzeiten minimiert werden.

Die Rundklinge ist vorzugsweise doppeltsymmetrisch ausgebildet. Die Rundklinge kann an jeder axialen Seite eine umlaufende Schneidkante aufweisen. Durch die beidseitigen Schneidkanten kann die Rundklinge bzw. das Rundmesser in beide Richtungen eingesetzt werden, was die Effizienz bei der Anwendung erhöht, und die Lebensdauer des Rundmessers verdoppelt. Darüber hinaus kann der Benutzer oder die Schneidvorrichtung bei Abnutzung einer Schneidkante einfach auf die andere Seite wechseln, was den Wartungsaufwand reduziert und die Betriebszeit maximiert.

Der Messerhalter kann als ein Spannring oder Spannhülse ausgebildet sein. Der Messerhalter kann einteilig bzw. monolithisch oder mehrteilig ausgebildet sein. Vorzugsweise weist der Messerhalter wenigstens einen Spalt auf, der sich ausgehend von einer axialen Seitenfläche des Messerhalters im wesentlichen L-förmig, also zunächst in axialer Richtung und dann in tangentialer Richtung in den Messerhalter erstreckt. Dabei kann der sich in axialer Richtung erstreckende Spaltabschnitt eine geringere Länge aufweisen als der sich in tangentialer Richtung erstreckende Spaltabschnitt. Den in axialer Richtung erstreckenden Spaltabschnnitt kann man sich als den kurzen Schenkel eines "L" vorstellen und der sich in tangentialer Richtung erstreckende Spaltabschnitt als den langen Schenkel des "L", der eine Krümmung aufweist. Vorzugsweise erstreckt sich der lange Schenkel entlang eines Viertels des im wesentlichen ringförmig ausgebildeten Messerhalters in tangentialer Richtung.

In einigen Ausführungsformen kann der Messerhalter zusätzlich oder alternativ hydraulische Komponenten, wie beispielsweise Hydrodehnspannfutter, umfassen, die eine präzise und/oder zuverlässige Verspannung des Messerhalters an der Messerwelle gewährleisten. Derartige hydraulischen Systeme können für eine gleichmäßige Spannkraftverteilung sorgen, wodurch eine hohe Stabilität und Genauigkeit beim Verspannen der Messerhalter erreicht wird.

Der Messerhalter kann das Spannmittel umfassen, das beispielsweise in Form einer Schraube ausgebildet ist. Der Messerhalter kann wenigstens eine Gewindebohrung umfassen, in der das Spannmittel bzw. die Schraube einführbar ist. Die Schraube kann in einer Gewindebohrung des Messerhalters angeordnet sein. Beispielsweise können die Schraube und die Gewindebohrung derart ausgebildet sein, dass die Schraube im Messerhalter, den sich in axialer Richtung erstreckenden Spaltabschnitt überbrückt. Beim Betätigen bzw. Anziehen der Schraube durch den Effektor, können der Messerhalter bzw. Teilkomponenten des Messerhalters zusammengezogen und/oder zumindest abschnittsweise expandiert werden, wodurch sich der Durchmesser, insbesondere der Innendurchmesser des Messerhalters verringert. Vorzugsweise verringert sich der Durchmesser des Messerhalters an der Stelle des axialen Spalts, sodass eine gleichmäßige Umfangsspannung auf die Messerwelle aufgebracht wird. Auf diese Weise kann eine zuverlässige Kraftübertragung auf die Messerwelle gewährleistet werden. Ebenso kann der Effektor durch Betätigen bzw. Lockern der Schraube, den Kraftschluss zwischen Messerhalter und Messerwelle wieder auflösen.

Ferner kann vorgesehen sein, dass die erfindungsgemäße Schneidvorrichtung auch beliebig anders ausgestaltete und dem Fachmann als vorteilhaft erscheinende Rundmesser bzw. Messerhalter, umfassen kann.

Der Messerhalter kann eine zumindest abschnittsweise in Umfangsrichtung verlaufende Nut aufweisen, die komplementär zu einem Greifabschnitt der Greifeinheit ausgebildet ist. Die Nut kann eine präzise Passform des Greifabschnitts darstellen, was eine sichere und/oder stabilere Kopplung gewährleistet. Ferner verbessert eine derartige Schnittstelle die Greifkraft im gekoppelten Zustand und verhindert ein Verrutschen oder Lösen der des Greifelements vom Messerhalter unter Belastung während eines Umpositionierungsvorgangs.

Ferner sieht eine Weiterbildung vor, dass der Messerhalters an einer Außenumfangsfläche zumindest einen Vorsprung und/oder eine Einkerbung aufweisen kann, der eine Referenz für die Ausrichtung des Rundmessers und/oder des Messerhalters bei einer Umpositionierung durch die Positionierungsvorrichtung bereitstellt. Der Vorsprung bzw. die Einkerbung spielt eine entscheidende Rolle bei der optimalen Ausrichtung des Rundmessers bzw. des Messerhalters. Eine solche "Markierung" kann eine exakte Identifizierung einer Ausrichtung des Rundmessers bzw. Messerhalters zur Kopplung mit dem Effektor und/oder der Greifvorrichtung gewährleisten und einen zuverlässigen Indikator für die optimale Ausrichtung darstellen. Dadurch können Fehler beim Umpositionieren der Rundmesser sowie Stillstandzeiten maßgeblich reduziert werden. An dieser Stelle sei darauf hingewiesen, dass die Einkerbung bzw. der Vorsprung lediglich beispielhaft zu verstehen ist und auch jegliche andere dem Fachmann als vorteilhaft erscheinende Markierung verwendet werden kann.

Gemäß einer Weiterbildung kann die Positionierungsvorrichtung wenigstens einen Sensor umfassen, der dazu eingerichtet ist, den zumindest einen Vorsprung und/der Einkerbung zu detektieren. Der Sensor, der den Vorsprung bzw. die Einkerbung oder eine andere für den Zweck der optimalen Ausrichtung des Rundmessers vorgesehenen Markierung erkennt, ermöglicht eine präzise und schnelle Detektion der Markierung, wodurch die Schneidvorrichtung automatisch und in Echtzeit auf die Position und den Zustand der Rundmessers reagieren kann. So kann beispielsweise nach Maßgabe mittels des Sensors erfassten Information eine Welle, auf der das umzupositionierende Messer angeordnet ist, gedreht werden, bis der Sensor die Markierung erfasst hat. Dies erhöht die Geschwindigkeit und Genauigkeit des Umpositionierungsvorgangs eines Rundmessers, da manuelle Eingriffe weitgehend entfallen.

In einigen Ausführungsvarianten kann die Positionierungsvorrichtung eine Überwachungseinheit umfassen, die dazu eingerichtet ist, einen Greifvorgang der Greifeinheit zu überwachen. Die Überwachungseinheit kann einen oder mehrere Sensoren umfassen, der dazu eingerichtet ist Daten, wie die Position, Geschwindigkeit und/oder Kraft der Greifvorrichtung zu messen, um sicherzustellen, dass der Greifvorgang effizient, sicher und/oder erfolgreich durchgeführt wird.

Durch den Einsatz von Drucksensoren und/oder Positionssensoren und/oder anderen dem Fachmann als vorteilhaft erscheinende Sensoren kann die Überwachungseinheit eine präzise Kontrolle über die Greifbewegungen bieten. Bei Abweichungen von vordefinierten Parametern, wie beispielsweise übermäßiger Kraft oder falscher Positionierung, kann ein Alarm ausgelöst werden oder die Greifeinheit in einen sicheren Zustand versetzt werden. Auf diese Weise kann die Betriebssicherheit sowie Effizienz maßgeblich erhöht werden.

In einer Ausführungsform, in der die Greiffunktion bzw. die Greifeinheit in den Effektor integriert ist, kann die Positionierungsvorrichtung ebenfalls eine Überwachungseinheit umfassen, die dazu eingerichtet ist, einen Kopplungsvorgang des Effektors zu überwachen.

Die Schneidvorrichtung kann wenigstens eine Antriebsspindel umfassen, die parallel zu der Längsachse der Messerwelle angeordnet und dazu eingerichtet ist, die Positionierungsvorrichtung parallel zu der Längsachse der Messerwelle zu bewegen. Eine derartige Ausführungsform bietet den Vorteil, dass stets eine hohe Präzision und Zuverlässigkeit während eines Umpositionierungsvorgangs des Rundmessers erzielt werden kann. Ihre kompakte Bauweise ermöglicht eine effiziente Raumnutzung und vereinfacht die Integration in bestehende Maschinen. Spindelantriebe können ferner hohe Verstellgeschwindigkeiten erreichen, was den gesamten Bearbeitungsprozess beschleunigt.

Ferner kann vorgesehen sein, dass die Schneidvorrichtung zusätzlich oder alternativ zu der Antriebsspindel auch andere bzw. weitere dem Fachmann als vorteilhaft erscheinende Antriebselemente, wie beispielsweise Zahnstangen und/oder Zahnriemen umfassen kann, die dazu eingerichtet sind, die Positionierungsvorrichtung parallel zu der Längsachse der Messerwelle zu bewegen.

Gemäß einer Weiterbildung kann die Schneidvorrichtung ferner umfassen:
- eine weitere Messerwelle, die parallel und beabstandet von der Messerwelle angeordnet ist;
- wenigstens ein weiteres Rundmesser, das auf der weiteren Messerwelle angeordnet ist; sowie
- wenigstens eine weitere Positionierungsvorrichtung, die dazu eingerichtet ist, das wenigstens eine weitere Rundmesser entlang einer weiteren Längsachse der weiteren Messerwelle zu verschieben und in einer vorgesehenen Position an der weiteren Messerwelle reversibel und kraftübertragend zu fixieren,
wobei die weitere Positionierungsvorrichtung umfasst:
- wenigstens einen weiteren Effektor der dazu eingerichtet ist, ein weiteres Spannmittel des wenigstens einen weiteren Rundmessers zu betätigen.

Bei dieser Weiterbildung ist vorgesehen, dass der weitere Effektor zum Betätigen des weiteren Spannmittels des wenigstens einen weiteren Rundmessers entlang einer Bewegungsachse bewegbar ist, die windschief zu der Längsachse der weiteren Messerwelle verläuft.

Die weitere Messerwelle, das weitere Rundmesser sowie die weitere Positionierungsvorrichtung, können baugleich zu der vorangehen beschriebenen Messerwelle, dem vorangehend beschriebenen Rundmesser sowie der vorangehend beschriebenen Positionierungsvorrichtung ausgebildet sein. Ebenso sind auch die voranstehend ausgeführten Weiterbildungsmerkmale analog auf die weiteren Schneidvorrichtungskomponenten anwendbar.

Die Schneidvorrichtung kann ferner wenigstens eine weitere Antriebsspindel umfassen, die parallel zu der weiteren Längsachse der weitere Messerwelle angeordnet und die dazu eingerichtet ist, die weitere Positionierungsvorrichtung parallel zu der weiteren Längsachse der weiteren Messerwelle zu bewegen. Die Redundanz der Antriebsspindel sowie der Positionierungsvorrichtung ermöglicht gleichzeitiges und/oder unabhängiges Umpositionieren von Rundmessern auf der Messerwelle und weiteren Rundmessern auf der weiteren Messerwellen. Auf diese Weise können Stillstandszeiten der Schneidvorrichtung maßgeblich reduziert werden.

Vorzugsweise ist die weitere Messerwelle über oder unter der Messerwelle angeordnet. In einigen Ausführungsformen können die Messerwelle und die weitere Messerwelle einen Tiefenversatz aufweisen.

In einer Ausführungsvariante kann die Schneidvorrichtung dazu eingerichtet sein, in einen aktiven Betriebszustand und/oder einen passiven Betriebszustand versetzt zu werden.

Unter einem aktiven Betriebszustand soll ein Zustand bzw. Modus der Schneidvorrichtung verstanden werden, in dem wenigstens zwei korrespondierend angeordnete Rundmesser, nachfolgend auch als Messerpaar bezeichnet, derart angeordnet sind, dass sie schneidfähig bzw. dazu eingerichtet sind, in dieser Messerstellung Flachmaterial zu schneiden.

Unter einem passiven Betriebszustand soll insbesondere ein Zustand bzw. Modus der Schneidvorrichtung verstanden werden, in dem die Rundmesser in vertikaler und/oder horizontaler Raumrichtung ausreichend voneinander beabstandet sind, sodass die Rundmesser keine Schneidfunktion aufweisen.

Um von dem passiven in den aktiven Betriebszustand zu wechseln und umgekehrt, kann die Schneidvorrichtung eine Hubvorrichtung umfassen, die dazu eingerichtet ist, einen Abstand zwischen der Messerwelle und der weiteren Messerwelle zu variieren. In dem aktiven Betriebszustand kann vorgesehen sein, dass die Rundmesser und die weiteren Rundmesser in axialer Flucht überlappen, wodurch eine Umpositionierung bzw. Verschiebung der Rundmesser verhindert wird bzw. das Risiko einer Beschädigung der Rundmesser durch eine Verschiebung eines benachbarten Rundmessers besteht. Mit der Hubvorrichtung können die Messerwellen und damit auch die Rundmesser auf den unterschiedlichen Wellen voneinander wegbewegt werden, sodass die Rundmesser axial nicht mehr fluchten.

Je nach Betriebssituation können die Rundmesser bzw. einzelne Rundmesserpaare auch jederzeit ausschließlich durch ausreichende Beabstandung der Rundmesser in horizontaler Raumrichtung bzw. entlang der Messerwellen mittels der Positionierungsvorrichtung aus einem aktiven Betriebszustand in einen passiven Betriebszustand überführt werden, ohne dabei die Messerwellen mithilfe der Hubvorrichtung voneinander beabstanden zu müssen.

Die Schneidvorrichtung kann vorzugsweise einen Exzenter umfassen, der mit einer der Messerwellen bewegungsübertragend gekoppelt ist. Durch manuelle oder automatische Betätigung des Exzenters kann die Hubvorrichtung betätigt werden.

Die Hubhöhe kann vorzugsweise geringer sein als ein Flankenspiel in einem Zahnradgetriebe, das zur Ansteuerung der Messerwellen eingerichtet ist. Dadurch sind die Messerwelle und die weitere Messerwelle auch in dem passiven Betriebszustand stets ansteuerbar.

Neben Zahnradgetrieben sind auch andere Antriebskomponenten vorstellbar, mit denen die Messerwelle und die weitere Messerwelle synchron und/oder unabhängig voneinander angetrieben werden können. Alternative Antriebskomponenten können beispielsweise Elektromotoren und/oder Gelenkwellen umfassen.

In einer Weiterbildung kann die Schneidvorrichtung ferner eine Steuereinheit umfassen, die dazu eingerichtet ist, die Positionierungsvorrichtung, die weitere Positionierungsvorrichtung, die Messerwelle und/oder die weitere Messerwelle bzw. daran gekoppelte Getriebe anzusteuern. Die Steuereinheit kann ein Bedienpad umfassen. Das Bedienpad ermöglicht eine intuitive und benutzerfreundliche Bedienung, was eine schnelle Anpassung von Einstellungen oder Parametern direkt an der Schneidvorrichtung erlaubt. Es ist auch denkbar, dass die Schneidvorrichtung remote angesteuert werden kann.

Die Steuerungseinheit für die Positionierungsvorrichtung kann nach einem SOLL-IST-Abgleich-Prinzip arbeiten. Zunächst wird ein System mit IST-Positionen der Rundmesser initialisiert. Die Positionierungseinheit, welche die Aufgabe hat, die Rundmesser entlang der Messerwellen zu bewegen, wird dann eingesetzt, um Umlagerungen durchzuführen. Dazu wird für eine Umpositionierung eine SOLL-Position für ein spezifisches Rundmesser angegeben, zu der es bewegt werden soll. Die Positionierungsvorrichtung fährt zu Beginn der Umpositionierung zur gespeicherten IST-Position des betreffenden Rundmessers, erfasst dieses und bewegt es zur vorgegebenen SOLL-Position. Sobald das Rundmesser an der neuen Position platziert ist, wird die SOLL-Position als neue IST-Position im System abgespeichert, um die aktualisierte Lage der Rundmesser kontinuierlich zu dokumentieren und für zukünftige Umpositionierungen bereitzustellen. Dieses Verfahren wiederholt sich für jede Umpositionierung.

Die vorliegende Erfindung betrifft ferner eine Bearbeitungsmaschine mit einer Schneidvorrichtung nach einem der vorherigen Ansprüche. Die Schneidvorrichtung kann vorzugsweise modular einsetzbar sein. Eine solche modular einsetzbare Schneidvorrichtung bietet den Vorteil einer hohen Flexibilität in der Fertigung. Sie kann als eigenständige Einheit betrieben oder in eine Produktionslinie integriert werden, um sich nahtlos in verschiedene Prozessschritte, wie beispielsweise Stanzen oder Abkanten einzufügen. Ferner ermöglicht die modulare Bauweise eine einfache Erweiterung oder Umstellung der Produktionslinie, was Investitionskosten senkt und Bauraum einspart.

Ferner betrifft die Erfindung ein Verfahren zum Positionieren eines Rundmessers in einer vorangehend beschriebenen Schneidvorrichtung. Es ergeben sich für das erfindungsgemäße Verfahren zum Positionieren eines Rundmessers die voranstehend zur Schneidvorrichtung erläuterten Vorteile.

Das Verfahren kann die folgenden Schritte umfassen:
A) Eingabe einer SOLL-Position wenigstens eines der Rundmesser;
B) Ausrichten der Positionierungsvorrichtung, relativ zu dem umzupositionierenden Rundmesser nach Maßgabe von abgespeicherten Positionsinformationen des umzupositionierenden Rundmessers und/oder einer IST-Position;
C) Ausrichten des Rundmessers nach Maßgabe von Sensordaten des Sensors;
D) Greifen des Rundmessers durch Ausfahren der Greifeinheit;
E) Ausfahren des Effektors nach Maßgabe von Überwachungsinformationen der Überwachungseinheit;
F) Drehen des Effektors um einen definierten Winkelbetrag und/oder bis zum Erreichen eines definierten Anzugsdrehmoments, um das Spannmittel zu lösen;
G) Verschieben des Rundmessers entlang der Längsachse der Messerwelle, auf dem das entsprechende Rundmesser angeordnet ist, auf die SOLL-Position;
H) Drehen des Effektors um einen definierten Winkelbetrag und/oder bis zum Erreichen eines definierten Anzugsdrehmoments, um das Spannmittel festzuziehen;
I) Einfahren des Effektors; und
J) Einfahren der Greifeinheit.

Die Schritte D) und J) können bei Ausführungsformen der Schneidvorrichtung weggelassen werden, bei denen der Effektor auch als Greifeinheit fungiert.

Gemäß einer Weiterbildung kann das Verfahren einen Schritt X) umfassen, wonach die Schneidvorrichtung durch Anheben und/oder Absenken der oberen und/oder unteren Messerwelle, sodass sich mehrere Rundmesser in axialer Flucht nicht überlappen, in einen passiven Betriebszustand überführt wird. Dieser Schritt X) kann dem Schritt B) vorgelagert sein. Dieser Schritt gewährleistet insbesondere, dass bei einer Schneidvorrichtung in der zwei Messerwellen bzw. die darauf angeordneten Rundmesser zusammenwirken, sich während eines Umpositionierungsvorgangs in axialer Flucht nicht überlappen bzw. behindern.

Ferner kann das Verfahren ein Schritt Y) umfassen, wonach die Schneidvorrichtung durch Absenken der oberen und/oder unteren Messerwelle, sodass sich mehrere Rundmesser in axialer Flucht zumindest abschnittsweise überlappen, in einen aktiven Betriebszustand überführt wird. Dieser Schritt Y) kann auf den Schritt J) folgen. Dieser Schritt stellt sicher, dass die Rundmesser nach erfolgter Umpositionierung aus dem passiven betriebszustand wieder in den aktiven Betriebszustand überführt und/oder funktionsfähig miteinander gekoppelt werden. Der Vorteil dieses Schritts liegt in der Reduzierung von Stillstandzeiten, da Wartungsarbeiten effizient abgeschlossen und die Messer schnell und wieder in den Produktionsprozess integriert werden können.

Die erfindungsgemäßen Vorrichtungen und Verfahren sollen hierbei nicht auf die oben beschriebenen Anwendungen und Ausführungsformen beschränkt sein. Insbesondere können diese zu einer Erfüllung einer hierin beschriebenen Funktionsweise eine von einer hierin genannten Anzahl von einzelnen Elementen, Bauteilen und Einheiten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

Im Folgenden wird die vorliegende Erfindung anhand der beigefügten Figuren beispielhaft beschrieben. Die Zeichnungen, die Beschreibung und die Ansprüche enthalten zahlreiche Merkmale in Kombination. Der Fachmann wird die Merkmale zweckmäßigerweise auch einzeln betrachten und im Rahmen der Ansprüche sinnvoll in Kombination verwenden.

Falls von einem bestimmten Objekt mehr als ein Exemplar vorhanden ist, ist ggf. nur eines davon in den Figuren und in der Beschreibung mit einem Bezugszeichen versehen. Die Beschreibung dieses Exemplars kann entsprechend auf die anderen Exemplare von dem Objekt übertragen werden. Sind Objekte insbesondere mittels Zahlenwörtern, wie beispielsweise erstes, zweites, drittes Objekt etc. benannt, dienen diese der Benennung und/oder Zuordnung von Objekten. Demnach können beispielsweise ein erstes Objekt und ein drittes Objekt, jedoch kein zweites Objekt umfasst sein. Allerdings könnten anhand von Zahlenwörtern zusätzlich auch eine Anzahl und/oder eine Reihenfolge von Objekten ableitbar sein.

Es zeigen:
- Fig. 1: eine räumliche Ansicht einer Bearbeitungsmaschine mit einer Schneidvorrichtung;
- Fig. 2: eine räumliche Ansicht der Schneidvorrichtung gemäß Fig. 1;
- Fig. 3: eine räumliche Ansicht eines Messerhalters von einer ersten Perspektive;
- Fig. 4: eine räumliche Ansicht des Messerhalters gemäß Fig. 3 von einer zweiten Perspektive;
- Fig. 5: eine räumliche Ansicht des Messerhalters gemäß Fig. 3 von einer dritten Perspektive;
- Fig. 6: den Messerhalters gemäß Fig. 4 mit einer Rundklinge;
- Fig. 7: eine perspektivische Längsschnittdarstellung einer Positionierungsvorrichtung gemäß Fig. 2 mit einem zu koppelnden Rundmesser;
- Fig. 8: eine Detailansicht der Positionierungsvorrichtung gemäß Fig. 2 mit Sensor, Überwachungseinheit und einem zu koppelnden Rundmesser;
- Fig. 9: eine Querschnittdarstellung der Positionierungsvorrichtung gemäß Fig. 2 und einem gekoppelten Rundmesser;
- Fig. 10: eine Detailansicht einer Seitenansicht eines korrespondierenden Rundmesserpaares gemäß Fig. 2 in einem aktiven Betriebszustand;
- Fig. 11: eine Detailansicht einer Seitenansicht des korrespondierenden Rundmesserpaares gemäß Fig. 10 in einem passiven Betriebszustand; und
- Fig. 12: ein Ablaufdiagramm eines Verfahrens zum Positionieren eines Rundmessers in einer Schneidvorrichtung gemäß Fig. 2.

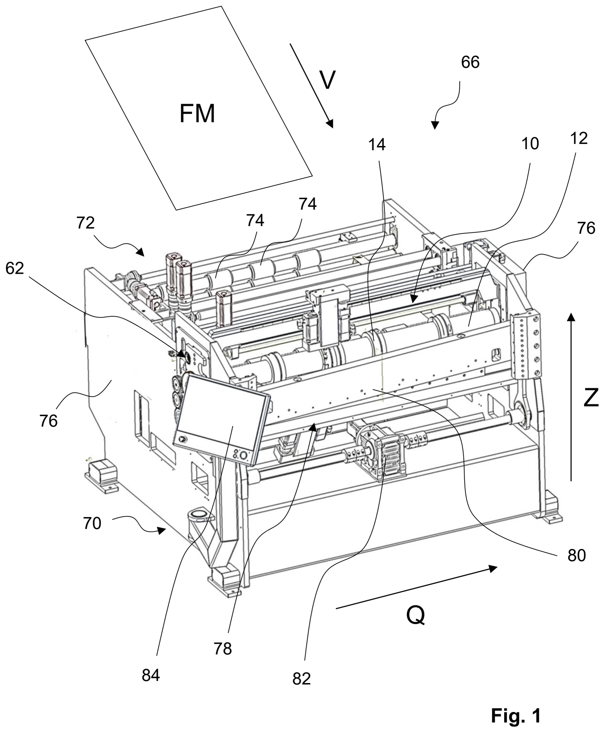

In Fig. 1 ist eine Bearbeitungsmaschine 66 mit einer erfindungsgemäßen Schneidvorrichtung 10 in einer perspektivischen Ansicht gezeigt. Die Bearbeitungsmaschine 66 umfasst neben der Schneidvorrichtung 10 eine fest auf einem Untergrund angebrachte Basis 70 mit einem Auflagertisch 72, auf dem Flachmaterial FM aufgelegt und in einer Vorschubrichtung V verlagert bzw. gerichtet werden kann. Zur Verlagerung dienen Führungsrollen 74, die angetrieben werden können und zwischen denen das Flachmaterial FM hindurchgeführt werden kann. Bei dem Flachmaterial FM kann es sich beispielsweise um ein Blechmaterial handeln. Die Basis 70 weist ferner zwei seitliche Wangen 76 auf, an denen der Auflagertisch 72 sowie die verschiedenen Führungsrollen 74 gelagert sind.

Die Schneidvorrichtung dient dazu, das Flachmaterial in Längsrichtung, d.h. in Vorschubrichtung V zu schneiden. Nach der Schneidvorrichtung 10 passiert das Flachmaterial FM eine Schlagscherenvorrichtung 78, mit der das Flachmaterial FM in Querrichtung Q geschnitten werden kann. Die Schlagscherenvorrichtung 78 umfasst ein Messer 80, das in Höhenrichtung Z über eine oder mehrere Linearführungsvorrichtungen, wie beispielsweise Gewindeantriebe und/oder Zahnstangenantriebe, bzw. einen oder mehrere Exzentertriebe 82 und/oder andere dem Fachmann als vorteilhaft erscheinende Vorrichtungen zur Höhenverstellung verlagerbar ist. Die Schneidvorrichtung 10 umfasst zwei in Höhenrichtung Z über eine Hubvorrichtung 62 verlagerbare Messerwellen 12, 50, auf denen jeweils eine Mehrzahl linear verschiebbare Rundmesser 14, 52 angeordnet sind. Die hierin gezeigte Hubvorrichtung 62 umfasst zumindest einen Exzentertrieb. Die untere Messerwelle 50 ist in Fig. 1 von der Schlagschere 78 weitestgehend verdeckt.

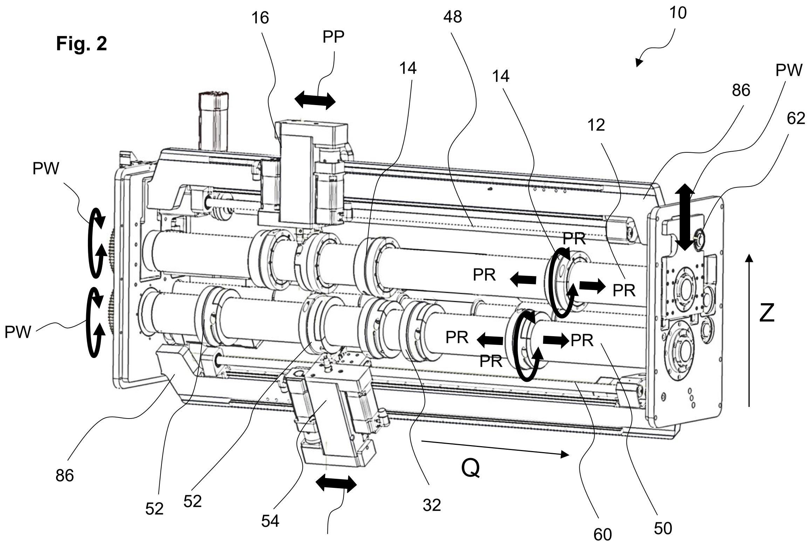

Darüber hinaus ist in Fig.1 ein Bedienpad 84 gezeigt, über das Befehle zur Steuerung der Bearbeitungsmaschine 66 gesendet und/oder Betriebsparameter der Bearbeitungsmaschine 66 überwacht werden können
Details der Schneidvorrichtung 10 erkennt man in der Darstellung 2, in der die in Fig. 1 gezeigten Wangen 76, die Schlagschere 78 sowie der Auflagertisch 72 ausgeblendet sind, um einen besseren Einblick in die Schneidvorrichtung 10 zu erhalten. Die Schneidvorrichtung 10 umfasst zwei Messerwellen 12, 50, die parallel und in der Raumrichtung Z übereinander angeordnet sind. Die obere Messerwelle 12 weist in der hierin gezeigten Ausführungsform vier Rundmesser 14 auf, die in unterschiedlichen Positionen entlang der oberen Messerwelle 12 angeordnet sind. Auf der unteren Messerwellen 50 sind insgesamt fünf Rundmesser 52 zu sehen. Das zweite Rundmesser 14 von links auf der oberen Messerwelle 12 ist in dem in Fig. 2 gezeigten Zustand funktionsfähig mit dem zweiten Rundmesser 52 von links auf der unteren Messerwelle 50 gekoppelt. Das bedeutet, dass diese beiden Messer 14, 52 zusammen ein Messerpaar bzw. einen gemeinsamen Schnittspalt bilden. Gleiches gilt für das dritte Rundmesser 14 von links auf der oberen Messerwelle 12 und dem dritten Messer 52 von links auf der unteren Messerwelle 50. Alle anderen Rundmesser 14, 52 sind ausreichend von benachbarten Rundmessern 14, 52 beabstandet und weisen in diesem Zustand keine Schneidfunktion auf. Da die Rundklingen 32 der Rundmesser 14, 52 doppeltsymmetrisch ausgebildet sind, können die Rundmesser 14, 52 jederzeit eine variable Messerpaarung bilden. Jedes Rundmesser 14, 52 kann so positioniert werden, dass es mit einem rechts und/oder links davon angeordneten Rundmesser 14, 52 einen gemeinsamen Schnittspalt bildet.

Parallel zu den Messerwellen 12, 50 ist jeweils eine 16, 54 vorgesehen. Die obere Positionierungsvorrichtung 16 ist dazu eingerichtet die Rundmesser 14 auf der oberen Messerwelle 12 bei Bedarf umzupositionieren und die untere Positionierungsvorrichtung 54 ist entsprechend dazu eingerichtet die Rundmesser 52 auf der unteren Messerwelle 50 umzupositionieren. Während die obere Positioniervorrichtung 16 auf einer ersten Ebene mit den Messerwellen 12, 50 angeordnet ist, ist die untere Positionierungsvorrichtung 54 auf einer zweiten Ebene angeordnet, die schräg zu der ersten Ebene verläuft. Jede der Positionierungsvorrichtungen 16, 54 weist eine Antriebsspindel 48, 60 auf, die sich parallel und nahezu über die gesamte Länge der jeweiligen Messerwelle 12, 50 erstrecken, sodass die Positionierungsvorrichtungen 16, 54 nahezu entlang der gesamten Länge der Messerwellen 12, 50 verfahrbar sind. Die Antriebsspindeln 48 60 sind bewegungsübertragend mit der jeweiligen Positionierungsvorrichtung 16, 54 gekoppelt. Über bzw. unter den beiden Antriebsspindeln 48, 60 ist jeweils eine Schiene bzw. eine Art Traverse 86 vorgesehen, die dazu eingerichtet sind, das Gewicht der jeweiligen Positionierungsvorrichtung 16, 54 zu tragen, die Positionierungsvorrichtungen 16, 54 auszurichten und/oder diese zu führen. Die Freiheitsgrade der Messerwellen 12, 50 ist durch die Pfeile PW, die Freiheitsgrade der Positionierungsvorrichtungen 16, 54 durch die Pfeile PP und die Freiheitsgrade der Rundmesser 14, 52 durch die Pfeile PR angedeutet. Der Übersichtlichkeit halber sind die Pfeile jedoch nicht an allen Komponenten der Schneidvorrichtung 10 eingezeichnet.

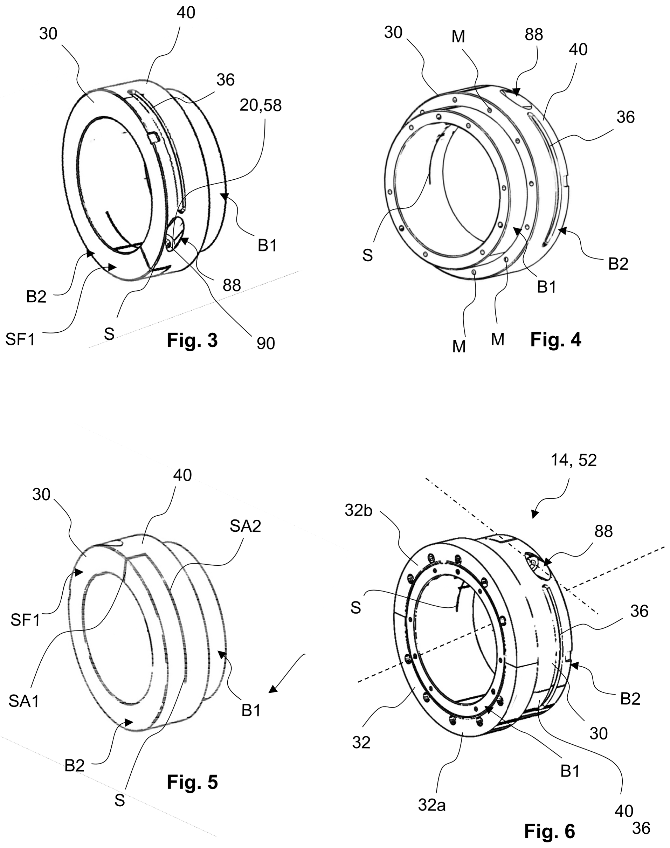

Den Figuren 3 bis 6 ist der Aufbau der in Fig. 2 gezeigten Rundmesser 14, 52 zu entnehmen. Jedes der Rundmesser 14, 52 ist in der hierin gezeigten Ausführungsform baugleich konfiguriert. Jedes der Rundmesser 14, 52 umfasst einen in den Figuren 3 bis 4 dargestellten einteiligen Messerhalter 30. Der Messerhalter 30 weist in axialer Richtung eine unterschiedliche Materialstärke auf. Ein Bereich B1 des Messerhalters 30 mit geringerer Materialstärke ist dazu eingerichtet mit einer Rundklinge 32 gekoppelt zu werden. Die Rundklinge 32 besteht aus einer ersten Klingenhälfte 32a und einer zweiten Klingenhälfte 32b, die, wie in Fig. 6 zu erkennen ist, auf dem Bereich D1 des Messerhalters 30, der die geringere Materialstärke aufweist, aufgesteckt und mit dem Messerhalter 30 an dafür vorgesehenen Montagepunkten M verschraubt sind.

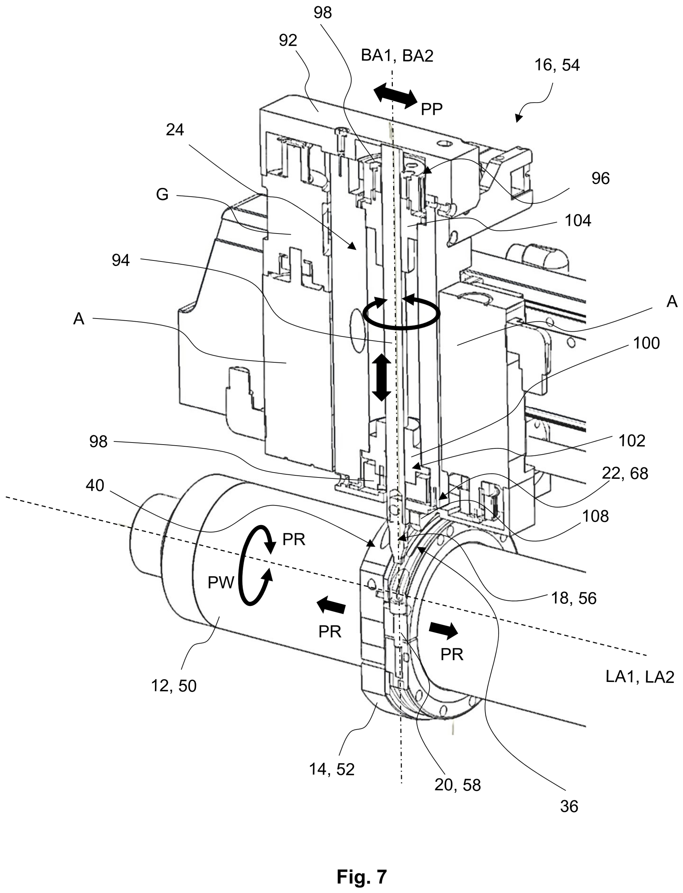

In einem Bereich D2 des Messerhalters 30 mit höherer Materialstärke ist an der Außenumfangsfläche 40 des Messerhalters eine Nut 36 vorgesehen. Diese Nut 36 ist komplementär zu einem Greifabschnitt 38 einer Greifeinheit 22, 68 der Positionierungsvorrichtung 16, 54. ausgebildet ist. Die Funktion der Nut 36 ist in den Figuren 7 bis 9 gezeigt. Neben der Nut 36 weist der Messerhalter 30 an der Außenumfangsfläche 40 eine Einkerbung 42 auf, die als eine Referenz für die Ausrichtung des Rundmessers 14, 52 bei einer Umpositionierung durch die Positionierungsvorrichtung 16, 54 dient.

Ferner weist der Messerhalter 30, wie in Fig. 5 zu erkennen, in dem Bereich D2 mit höherer Materialstärke einen Spalt S auf, der sich ausgehend von einer axialen Seitenfläche SF1 des Messerhalters 30 im wesentlichen L-förmig, also zunächst in axialer Richtung und dann in tangentialer Richtung in den Messerhalter 30 erstreckt. Der sich in axialer Richtung erstreckende Spaltabschnitt SA1 weist eine geringere Länge als der sich in tangentialer Richtung erstreckende Spaltabschnitt. Der sich in axialer Richtung erstreckende Spaltabschnitt SA1 erinnert an einen kurzen Schenkel eines "L" und der sich in tangentialer Richtung erstreckende Spaltabschnitt SA2 an den langen Schenkel eines "L". Der sich in tangentialer Richtung erstreckende Spaltabschnitt SA2 des Spalts S weist eine Krümmung bzw. den Krümmungsradius des Messerhalters 30 auf. Der lange Spaltabschnitt SA2 erstreckt sich in der hierin gezeigten Ausführungsform entlang eines Viertels des ringförmig ausgebildeten Messerhalters 30 in tangentialer Richtung.

Der Messerhalter 30 weist außerdem eine Gewindebohrung 88 mit einem darin angeordneten Spannmittel 20, 58 in Form einer Schraube 90 auf, die den sich in axialer Richtung erstreckenden Spaltabschnitt SA1 überbrückt. Die Gewindebohrung 88 und die Schraube 90 erstrecken sich dabei windschief zu einer Mittelachse des Messerhalters 30. Beim Betätigen bzw. Anziehen der Schraube 90 durch einen Effektor 18, 56 der Positionierungsvorrichtung 14, 54, kann der Messerhalter 30 zusammengezogen werden, wodurch sich der Durchmesser des Messerhalters 30 an der Stelle des axialen Spalts SA1 verringert und eine gleichmäßige Umfangsspannung auf die Messerwelle 12, 50 aufbringt.

Fig. 7 zeigt eine perspektivische Längsschnittdarstellung einer Positionierungsvorrichtung 16, 54 gemäß Fig. 2 mit einem zu koppelnden Rundmesser 14, 52. Zu erkennen ist ein Rohling bzw. Gehäuse 92 der Positionierungsvorrichtung 16, 54, in der ein Hub-Dreh-Modul 24 angeordnet ist. Das Hub-Dreh-Modul 24 umfasst eine Hub-Dreh-Spindel 94, die sich größtenteils in dem Gehäuse 92 der Positionierungsvorrichtung 16, 54 und entlang einer Bewegungsachse BA1, BA2 windschief zu einer Längsachse LA1, LA2 einer Messerwelle 12, 50 erstreckt. An einem proximalen Endabschnitt 96 der Hub-Dreh Spindel 94, also einem Endabschnitt 96 der Hub-Dreh-Spindel 94, welcher einem umzupositionierenden Rundmesser 14, 52 bzw. der Messerwelle 12, 50 abgewandt ist, ist eine Riemenscheibe 98 sowie eine bewegungsübertragend mit der Riemenscheibe 98 gekoppelte Drehmomentkugelbuchse 104 angeordnet. An einem distalen Endabschnitt 102 der Hub-Dreh-Spindel 94, also einem Endabschnitt, welcher dem umzupositionierenden Rundmesser 14, 52 bzw. der Messerwelle 12, 50 zugewandt ist, ist eine weitere Riemenscheibe 98 mit einer korrespondierenden Kugelgewindemutter 100 angeordnet.

Ferner sind zwei Antriebseinheiten A in Form von Elektromotoren zu erkennen. Der in der Fig. 7 gezeigten Ausführungsform links angeordnete Motor ist über ein Getriebe G und einen hierin nicht dargestellten Riemen, bewegungsübertragend mit der Riemenscheibe 98 der Kugelgewindemutter 100 gekoppelt. Das Getriebe G kann insbesondere dazu eingerichtet sein ein Übersetzungsverhältnis zwischen einem der Elektromotoren und der Drehmomentkugelbuchse 104 bzw. der Riemenscheibe 98 zu verändern und dadurch ein Drehmoment zu verstärken bzw. ein höheres Drehmoment bereitzustellen. Der in Fig. 7 gezeigten Ausführungsform rechts angeordnete Motor ist direkt über einen Riemen mit der Riemenscheibe 98 der Kugelgewindemutter 100 bewegungsübertragend gekoppelt.

Durch Ansteuerung der Kugelgewindemutter 100 und/oder der Drehmomentkugelbuchse 104 lassen sich kombinierte Bewegungsabläufe, wie Positionierungs-, Linear- und/oder Drehbewegungen der Hub-Dreh-Spindel 94 erzeugen. Das Hub-Dreh-Modul 24 ermöglicht gegenüber konventionellen Systemen aus vielen Bauteilen, Einsparungen an Gewicht und Bauraum.

An dem distalen Ende der Hub-Dreh-Spindel 24 ist ein Effektor 18, 56 bewegungsübertragend mit der Hub-Dreh-Spindel 24 gekoppelt. In der in Fig. 7 gezeigten Ausführungsform ist der Effektor 18, 56 komplementär zu dem Spannmittel 20, 58 ausgebildet. Der Effektor 18, 56 ist in Fig. 7 beispielhaft als ein Schraubenschlüssel 106 mit einem Außen-Sechskantprofil ausgebildet. Das Spannmittel 20, 58 in dem auf der Messerwelle 12, 50 angeordneten Rundmesser 14, 52 ist in der hierin gezeigten Ausführungsform entsprechend komplementär als Inbus konfiguriert.

In der Fig. 7 ist außerdem ein Greifelement 108 einer Greifeinheit 22, 68 zu erkennen, dass eine komplementär zu einer Nut 36 an der Außenumfangsfläche 40 des Messerhalters 30 ausgebildete Kontur bzw. einen komplementär zu einer Nut 36 an der Außenumfangsfläche 40 des Messerhalters 30 ausgebildeten Greifabschnitt 38 aufweist.

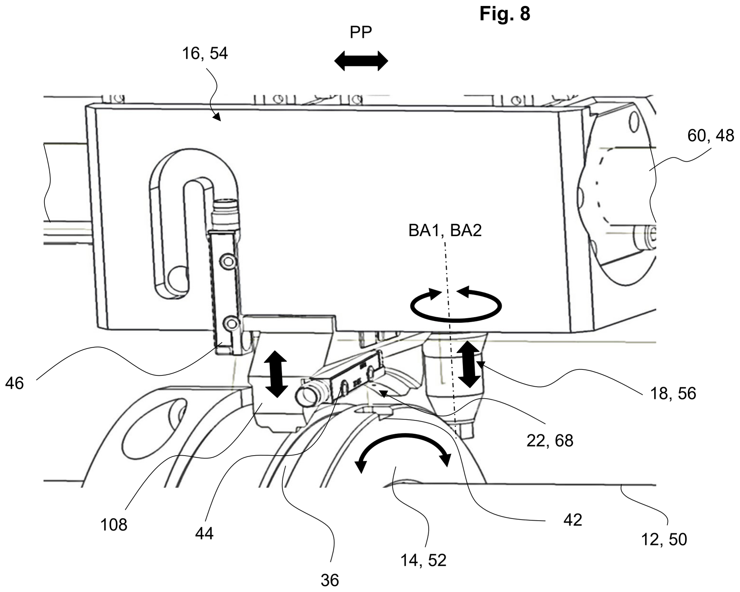

Fig. 8 zeigt eine Detailansicht der Positionierungsvorrichtung 16, 54 gemäß Fig. 2 mit einem Sensor 44, einer Überwachungseinheit 46 sowie einem zu koppelnden Rundmesser 14, 52. Der Sensor 44 ist an dem Greifelement 108 angeordnet und hin zur Messerwelle 12, 50 bzw. dem Rundmesser 14, 52 gerichtet. Der Senor 44 ist dazu eingerichtet, eine Markierung, die in der vorliegend gezeigten Ausführungsform als Einkerbung 42 ausgebildet ist, zu detektieren. Sollte das Rundmesser 14, 52 beispielsweise um einen Winkelbetrag verdreht worden sein, sodass der Sensor 44 die Einkerbung 42 nicht erfassen und die Greifeinheit 22, 68 das Rundmesser 14, 52 nicht greifen kann, so kann der Sensor 44 während eines Umpositionierungsvorgangs über Ansteuern der entsprechenden Messerwelle 12, 50 auf dem sich das umzupositionierende Rundmesser 14, 52 befindet, so lange eine Rotationsbewegung initiieren, bis die Einkerbung 42 vom Sensor 44 erfasst wird und das Rundmesser 14, 52 für den Umpositionierungsvorgang korrekt ausgerichtet ist. Sobald dies der Fall ist, wird das Greifelement 108 durch eine Linearbewegung hin zu dem umzupositionierenden Rundmesser 14, 52 bzw. der komplementären Nut 36 auf dem Messerhalter 30 bewegt. Eine Überwachungseinheit 46, die dazu eingerichtet ist, einen Greifvorgang der Greifeinheit 22, 68 zu überwachen, misst die Bewegung und/oder Position des Greifelements 108. Auf Basis dieser Messdaten wird der Zeitpunkt bestimmt, in dem das Greifelement 108 zuverlässig das in die Nut 36 des Rundmessers 14, 52 eingreift.

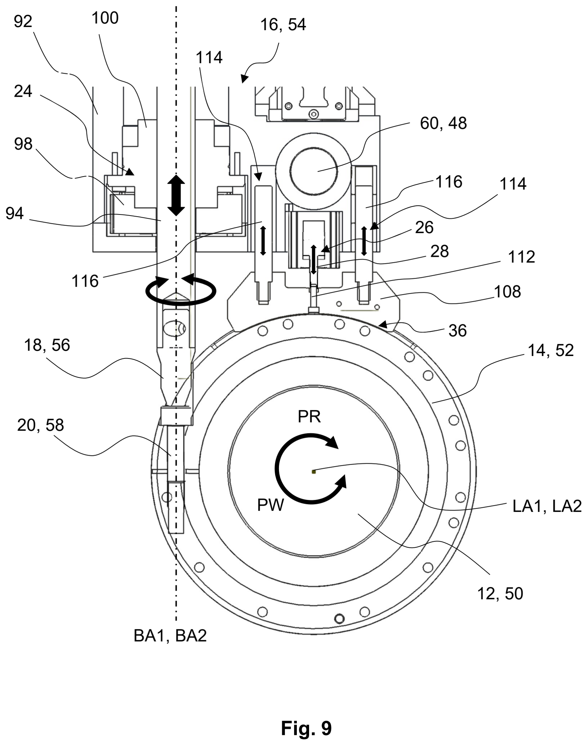

Ein möglicher Bewegungsmechanismus des Greifelements 108 ist in Fig. 9, einer Querschnittdarstellung der Positionierungsvorrichtung 16, 54, gezeigt. Zu erkennen ist, ein Pneumatikzylinder 26, der in das Gehäuse 92 der Positionierungsvorrichtung 16, 54 eingelassen bzw. integriert ist. Der Pneumatikzylinder 26 bzw. dessen Kolbenstange 28 ist über ein Schraubelement 112 bewegungsübertragend mit dem Greifelement 108 gekoppelt. Um eine gleichmäßige Bewegung des Greifelements 108 zu gewährleisten, weist die Positionierungsvorrichtung 16, 54 ferner zwei Lagerungen 114 mit zwei Stiften 116 auf, die links und rechts neben dem Schraubelement 112 mit dem Greifelement 108 gekoppelt sind.

Sobald das Greifelement 108, wie in der Fig. 9 gezeigt, erfolgreich mit dem Rundmesser 14, 52 gekoppelt ist, wird das Hub-Dreh-Modul 24 aktuiert, und der Effektor 18, 56 in einer Linearbewegung entlang einer Bewegungsachse BA1, BA2, die windschief zu der sich in die Zeichnungsebene hinein erstreckende Längsachse LA1, LA2 der Messerwelle 12, 50 erstreckt, mit dem Spannmittel 20, 58, in der hierin gezeigten Ausführungsform mit dem Inbus, in Eingriff gebracht. Schließlich wird über das Hub-Dreh-Modul 24 eine Drehbewegung initiiert und das Spannmittel 20, 58 gelöst.

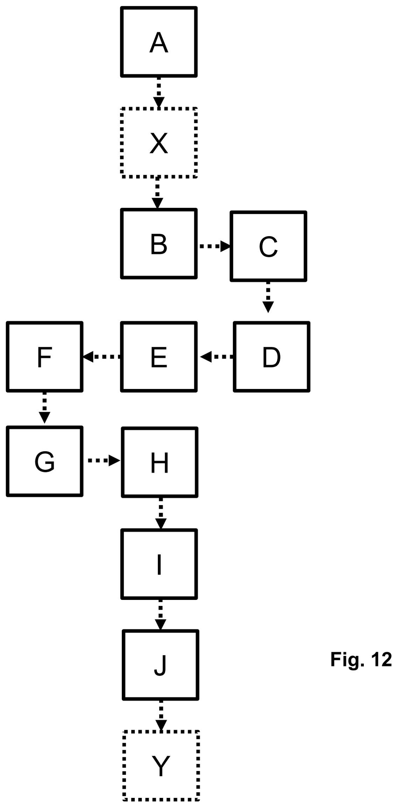

Fig. 12 zeigt Verfahren zum Positionieren eines Rundmessers 14, 52 mit einer vorangehend beschriebenen Schneidvorrichtung 10. In einem Schritt A) erfolgt eine Eingabe einer SOLL-Position wenigstens eines der Rundmesser 14, 52. Die Eingabe kann manuell durch einen Bediener und/oder automatisch erfolgen. In einem Schritt B) wird die Positionierungsvorrichtung 16, 54 relativ zu dem umzupositionierenden Rundmesser 14, 52 nach Maßgabe von abgespeicherten Positionsinformationen des umzupositionierenden Rundmessers 14, 52 und/oder einer aktuellen IST-Position des Rundmessers 14, 52 ausgerichtet. Das heißt, in diesem Schritt B) wird die Positionierungsvorrichtung zu dem umzupositionierenden Rundmesser 14, 52 hinbewegt. Es folgt der Schritt C), in dem das Rundmesser 14, 52 nach Maßgabe von Sensordaten des Sensors 44 ausgerichtet wird. Dieser Schritt C) kann insbesondere das Drehen der Messerwelle 12, 50 bzw. des Rundmessers 14, 52 beinhalten, bis der Sensor44 eine Referenz detektiert hat und sich das Rundmesser 14, 52 in einer zur Umpositionierung geeigneten Position bzw. Ausrichtung befindet. In einem Schritt D) wird die Greifeinheit bzw. das Greifelement 108 ausgefahren und das Rundmesser 14, 52 gegriffen. Als nächstes wird in einem Schritt E) der Effektor 18, 56 nach Maßgabe von Überwachungsinformationen der Überwachungseinheit 46 ausgefahren. Es wird also mit dem Ausfahren des Effektors 18, 56 gewartet, bis bestätigt wurde, dass die Kopplung des Greifelements 108 mit dem Rundmesser 14, 52 erfolgreich war. Anschließend wird in einem Schritt F) der Effektors 18, 56 um einen definierten Winkelbetrag und/oder bis zum Erreichen eines definierten Anzugsdrehmoments gedreht, um das Spannmittel 20, 58 zu lösen. Dem Schritt F) folgt ein Schritt G), in dem das Rundmesser 14, 52 mittels der Positionierungsvorrichtung 16, 54 entlang der Längsachse LA1, LA2 der Messerwelle 12, 50, auf dem das entsprechende Rundmesser 14, 52 angeordnet ist, auf die SOLL-Position verschoben wird. Ferner wird in einem Schritt H) der Effektor 18, 56 um einen definierten Winkelbetrag und/oder bis zum Erreichen eines definierten Anzugdrehmoments gedreht, um das Spannmittel 20, 58 festzuziehen und eine ausreichende Klemmkraft zu erzeugen. Abschließend werden in einem Schritt I) der Effektor 18, 56 und in einem Schritt J) die Greifeinheit bzw. das Greifelement 108 wieder eingefahren.

Ferner sind in Fig. 12 die optionalen Schritte X und Y gezeigt. Diese Schritte können insbesondere Bestandteil des Verfahrens zum Positionieren von Rundmessern 14, 52 sein, wenn die Schneidvorrichtung 10 eine weitere Messerwelle 50 mit weiteren Rundmessern 52 aufweist.

Der Schritt X) kann dem Schritt B) vorgelagert sein und beinhalten, dass die Schneidvorrichtung 10 durch Anheben oder Absenken der Messerwelle 12 und/oder der weiteren Messerwelle 50, sodass sich mehrere Rundmesser 14, 52 in axialer Flucht nicht überlappen, in einen passiven Betriebszustand überführt wird. Der passive Betriebszustand soll sich hierbei auf einen Zustand beziehen, in dem die Schneidvorrichtung 10 gezielt außer Betrieb genommen wird, um Wartungs- oder Anpassungsarbeiten durchzuführen und/oder ein Schneiden von Flachmaterial zu verhindern. In diesem Zustand sind alle Sicherheits- und Betriebsmechanismen aktiv, um sicherzustellen, dass keine unbeabsichtigten Bewegungen oder Operationen stattfinden. Der passive Betriebszustand ermöglicht, dass die Rundmesser 14, 52 sicher und präzise positioniert und/oder justiert werden können, ohne dass Gefahr besteht, dass sie während des Eingriffs in Bewegung geraten und/oder beschädigt werden. Dies ist besonders wichtig, da in einem aktiven Betriebszustand eine enge Toleranz zwischen den Rundmessern 14, 52 bzw. den Schneidkanten 118 der Rundmesser 14 ,52 besteht und jegliche Veränderung der Position oder des Abstands während des Betriebs zu einer Fehlfunktion oder sogar zu Schäden führen könnte.

Ferner kann in dem Schritt Y) die Schneidvorrichtung 10 durch Anheben oder Absenken der Messerwelle 12 und/oder der weiteren Messerwelle 50, sodass sich mehrere Rundmesser 14, 52 in axialer Flucht zumindest abschnittsweise überlappen, wieder in einen aktiven Betriebszustand überführt werden. Dieser Schritt Y) kann auf den Schritt J) folgen.

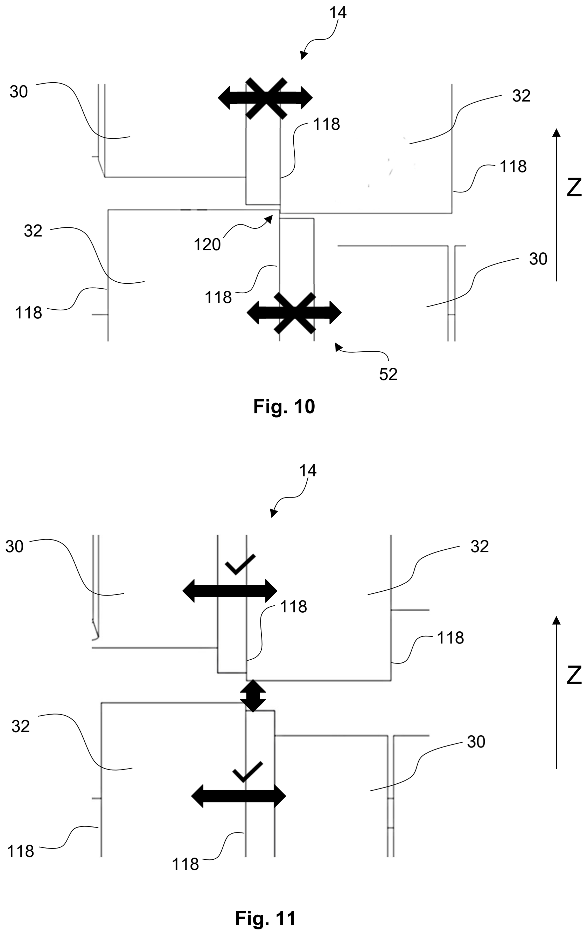

Zur besseren Veranschaulichung der Schritte X) und Y) kann auf die Figuren 10 und 11 verwiesen werden. In Fig. 10 sind ein Rundmesser 14 und ein weiteres Rundmesser 52 in einem aktiven Betriebszustand gezeigt. In diesem Zustand überlappen sich die Rundmesser 14, 52 bzw. deren Rundklingen 32 abschnittsweise in axialer Flucht. Die Rundmesser 14 und 52 weisen zwei sich einander gegenüberliegende Schnittkanten 118 zwischen denen sich im aktiven Betriebszustand ein Schnittspalt 120 ausbildet. In Fig. 11 sind das Rundmesser 14 und das weitere Rundmesser 52 aus Fig. 10 in einem passiven Betriebszustand gezeigt. In diesem Zustand sind die Rundmesser 14, 52 in Höhenrichtung Z voneinander beabstandet, sodass die Rundklingen 32 einander in axialer Flucht nicht überlappen und sich die Rundmesser 14, 52 während einer Umpositionierung nicht behindern.

An dieser Stelle sei darauf hingewiesen, dass die Schneidvorrichtung 10 zusätzlich oder alternativ auch durch alleinige ausreichende Beabstandung der Rundmesser 14, 52 entlang der Messerwellen 12, 50, sodass die Rundmesser 14, 52 aufgrund eines zu großen Abstands voneinander keine Schneidwirkung mehr entfalten, von einem aktiven Betriebszustand in einen passiven Betriebszustand überführt werden können.

**Bezugszeichenliste**

| | | | |
|---|---|---|---|
| 10 | Schneidvorrichtung | 78 | Schlagscherenvorrichtung |
| 12 | Messerwelle | 80 | Messer |
| 14 | Rundmesser | 82 | Exzentertrieb |
| 16 | Positionierungsvorrichtung | 84 | Bedienpad |
| 18 | Effektor | 86 | Traverse |
| 20 | Spannmittel | 88 | Gewindebohrung |
| 22 | Greifeinheit | 90 | Schraube |
| 24 | Hub-Dreh-Modul | 92 | Gehäuse |
| 26 | Pneumatikzylinder | 94 | Hub-Dreh-Spindel |
| 28 | Kolbenstange | 96 | proximaler Endabschnitt |
| 30 | Messerhalter | 98 | Riemenscheibe |
| 32 | Rundklinge | 100 | Kugelgewindemutter |
| 32a, | b Klingenhälfte | 102 | distales Ende |
| 34 | Spannring | 104 | Drehmomentkugelbuchse |
| 36 | Nut | 106 | Schraubenschlüssel |
| 38 | Greifabschnitt | 108 | Greifelement |
| 40 | Außenumfangsfläche | 112 | Schraubelement |
| 42 | Einkerbung | 114 | Lagerung |
| 44 | Sensor | 116 | Stift |
| 46 | Überwachungseinheit | 118 | Schneidkante |
| 48 | Antriebsspindel | 120 | Schnittspalt |
| 50 | weitere Messerwelle | A | Antriebseinheit |
| 52 | weiteres Rundmesser | G | Getriebe |
| 54 | weitere Positionierungsvorrichtung | PW | Freiheitsgrad |
| 56 | weiterer Effektor | PR | Freiheitsgrad |
| 58 | weiteres Spannmittel | PP | Freiheitsgrad |
| 60 | weitere Antriebsspindel | 120D1 | Bereich des Messerhalters |
| 62 | Hubvorrichtung | D2 | Bereich des Messerhalters |
| 64 | Steuereinheit | S | Spalt |
| 66 | Bearbeitungsmaschine | SA1 | Spaltabschnitt |
| 68 | weitere Greifeinheit | SA2 | Spaltabschnitt |
| 70 | Basis | SF1 | Seitenfläche |
| 72 | Auflagertisch | M | Montagepunkt |
| 74 | Führungsrollen | LA1 | Längsachse |
| 76 | Wange | | |
| LA2 | Längsachse | | |
| BA1 | Bewegungsachse | | |
| BA2 | Bewegungsachse | | |
| FM | Flachmaterial | | |
| V | Vorschubrichtung | | |
| Q | Querrichtung | | |
| Z | Höhenrichtung | | |

## Patentansprüche

1. Schneidvorrichtung (10) zum Schneiden von Flachmaterial, wie beispielsweise Blech, umfassend:
- eine Messerwelle (12), an der wenigstens ein Rundmesser (14) befestigbar ist;
- eine Positionierungsvorrichtung (16), die dazu eingerichtet ist, das wenigstens eine Rundmesser (14) in einem gelösten Zustand entlang einer Längsachse (LA1) der Messerwelle (12) zu verschieben und in einer vorgesehenen Position an der Messerwelle (12) reversibel und kraftübertragend zu fixieren, wobei die Positionierungsvorrichtung (16) wenigstens einen Effektor (18) aufweist, der dazu eingerichtet ist, ein Spannmittel (20) des wenigstens einen Rundmessers (14) zu betätigen;
**dadurch gekennzeichnet,**
**dass** der Effektor (12) zum Betätigen des Spannmittels (20) entlang einer Bewegungsachse (BA1) bewegbar ist, die windschief zu der Längsachse (LA1) der Messerwelle (12) verläuft.

2. Schneidvorrichtung (10) nach Anspruch 1,
wobei die Positionierungsvorrichtung (16) eine Greifeinheit (22) aufweist, die mit dem wenigstens einen Rundmesser (14) bewegungsübertragend koppelbar ist.

3. Schneidvorrichtung (10) nach Anspruch 1,
wobei der wenigstens eine Effektor (18) mit dem wenigstens einen Rundmesser (14) bewegungsübertragend koppelbar ist.

4. Schneidvorrichtung (10) nach einem der vorherigen Ansprüche,
wobei die Positionierungsvorrichtung (16) ein Hub-Dreh Modul (24) umfasst, das dazu eingerichtet ist, den Effektor (18) entlang der Bewegungsachse (BA1) zu bewegen und um die Bewegungsachse (BA1) zu rotieren.

5. Schneidvorrichtung (10) nach Anspruch 2 oder 4,
wobei die Positionierungsvorrichtung (16) einen Pneumatikzylinder (26) und/oder einen Hydraulikzylinder mit einer Kolbenstange (28) umfasst, die mit der Greifeinheit (22) bewegungsübertragend gekoppelt ist.

6. Schneidvorrichtung (10) nach einem der vorherigen Ansprüche,
ferner umfassend das wenigstens eine Rundmesser (14), das einen Messerhalter (30) sowie eine Rundklinge (32) umfasst, die verliersicher mit dem Messerhalter (30) koppelbar und/oder gekoppelt ist.

7. Schneidvorrichtung (10) nach Anspruch 6,
wobei der Messerhalter (30) als ein Spannring (34) ausgebildet ist.

8. Schneidvorrichtung (10) nach Anspruch 6 oder 7,
wobei der Messerhalter (30) eine zumindest abschnittsweise in Umfangsrichtung verlaufende Nut (36) aufweist, die komplementär zu einem Greifabschnitt (38) der Greifeinheit (22) ausgebildet ist.

9. Schneidvorrichtung (10) nach einem der Ansprüche 6 bis 8,
wobei der Messerhalter (30) an dessen Außenumfangsfläche (40) zumindest einen Vorsprung und/oder zumindest eine Einkerbung (42) aufweist, der/die eine Referenz für die Ausrichtung des Rundmessers (14) bei einer Umpositionierung durch die Positionierungsvorrichtung (16) bereitstellt.

10. Schneidvorrichtung (10) nach Anspruch 9,
wobei die Positionierungsvorrichtung (16) wenigstens einen Sensor (44) umfasst, der dazu eingerichtet ist, den zumindest einen Vorsprung und/oder die zumindest eine Einkerbung (42) zu detektieren.

11. Schneidvorrichtung (10) nach einem der Ansprüche 2 und 4 bis 10,
wobei die Positionierungsvorrichtung (16) eine Überwachungseinheit (46) umfasst, die dazu eingerichtet ist, einen Greifvorgang der Greifeinheit (22) zu überwachen.

12. Schneidvorrichtung (10) nach zumindest einem der Ansprüche 1, 3 bis 7, 9 oder 10, wobei die Positionierungsvorrichtung (16) eine Überwachungseinheit (46) umfasst, die dazu eingerichtet ist, einen Kopplungsvorgang des Effektors (18) zu überwachen.

13. Schneidvorrichtung (10) nach einem der vorherigen Ansprüche,
ferner umfassend wenigstens eine Antriebsspindel (48), die parallel zu der Längsachse (LA1) der Messerwelle (12) angeordnet und dazu eingerichtet ist, die Positionierungsvorrichtung (16) parallel zu der Längsachse (LA1) der Messerwelle (12) zu bewegen.

14. Schneidvorrichtung (10) nach einem der vorherigen Ansprüche, ferner umfassend:
- eine weitere Messerwelle (50), die parallel und beabstandet von der Messerwelle (12) angeordnet ist;
- wenigstens ein weiteres Rundmesser (52), das auf der weiteren Messerwelle (50) angeordnet ist; sowie
- wenigstens eine weitere Positionierungsvorrichtung (54), die dazu eingerichtet ist, das wenigstens eine weitere Rundmesser (52) entlang einer Längsachse (LA2) der weiteren Messerwelle (50) zu verschieben und in einer vorgesehenen Position an der weiteren Messerwelle (50) reversibel und kraftübertragend zu fixieren,
wobei die weitere Positionierungsvorrichtung (54) umfasst:
- wenigstens einen weiteren Effektor (56) der dazu eingerichtet ist, ein weiteres Spannmittel (58) des wenigstens einen weiteren Rundmessers (52) zu betätigen;
**dadurch gekennzeichnet,**
**dass** der weitere Effektor (56) zum Betätigen des weiteren Spannmittels (58) des wenigstens einen weiteren Rundmessers (52) entlang einer Bewegungsachse (BA2) bewegbar ist, die windschief zu der Längsachse (LA2) der weiteren Messerwelle (50) verläuft.

15. Schneidvorrichtung (10) nach Anspruch 14,
ferner umfassend wenigstens eine weitere Antriebsspindel (60), die parallel zu der Längsachse (LA2) der weitere Messerwelle (50) angeordnet und die dazu eingerichtet ist, die weitere Positionierungsvorrichtung (54) parallel zu der Längsachse (LA2) der weiteren Messerwelle (50) zu bewegen.

16. Schneidvorrichtung (10) nach Anspruch 14 oder 15,
ferner umfassend:
- eine Hubvorrichtung (62), die dazu eingerichtet ist, einen Abstand zwischen der Messerwelle (12) und der weiteren Messerwelle (50) zu variieren.

17. Schneidvorrichtung (10) nach einem der vorherigen Ansprüche, ferner umfassend eine Steuereinheit (64), die dazu eingerichtet ist, die Positionierungsvorrichtung (16), die weitere Positionierungsvorrichtung (54), die Messerwelle (12) und/oder die weitere Messerwelle (50) anzusteuern.

18. Bearbeitungsmaschine (66) mit einer Schneidvorrichtung (10) nach einem der vorherigen Ansprüche.

19. Verfahren zum Positionieren eines Rundmessers (14, 52) in einer Schneidvorrichtung (10) gemäß den Ansprüchen 17, 10, 11 und 2 die Schritte umfassend:
A) Eingabe einer SOLL-Position wenigstens eines der Rundmesser (14, 52);
B) Ausrichten der Positionierungsvorrichtung (16, 54), relativ zu dem umzupositionierenden Rundmesser (14, 52) nach Maßgabe von abgespeicherten Positionsinformationen des umzupositionierenden Rundmessers (14, 52) und/oder einer IST-Position;
C) Ausrichten des Rundmessers (14, 52) nach Maßgabe von Sensordaten des Sensors (44);
D) Greifen des Rundmessers (14, 52) durch Ausfahren der Greifeinheit (22, 68);
E) Ausfahren des Effektors (18, 56) nach Maßgabe von Überwachungsinformationen der Überwachungseinheit (46);
F) Drehen des Effektors (18, 56) um einen definierten Winkelbetrag und/oder bis zum Erreichen eines definierten Anzugsdrehmoments, um das Spannmittel (20, 58) zu lösen;
G) Verschieben des Rundmessers (14, 52) entlang der Längsachse (LA1, LA2) der Messerwelle (12, 50), auf dem das entsprechende Rundmesser (14, 52) angeordnet ist, auf die SOLL-Position;
H) Drehen des Effektors (18, 56) um einen definierten Winkelbetrag und/oder bis zum Erreichen eines definierten Anzugsdrehmoments, um das Spannmittel (20, 58) festzuziehen;
I) Einfahren des Effektors (18, 56); und
J) Einfahren der Greifeinheit (22, 68).

20. Verfahren zum Positionieren eines Rundmessers (14, 52) gemäß Anspruch 19 in einer Schneidvorrichtung gemäß dem Anspruch 14,
wobei ein Schritt X), wonach die Schneidvorrichtung (10) durch Anheben oder Absenken der Messerwelle (12) und/oder der weiteren Messerwelle (50), sodass sich mehrere Rundmesser (14, 52) in axialer Flucht nicht überlappen, in einen Wartungszustand überführt wird, dem Schritt B) vorgelagert ist.

21. Verfahren zum Positionieren eines Rundmesser (14, 52) gemäß Anspruch 20, wobei ein Schritt Y), wonach die Schneidvorrichtung (10) durch Absenken der Messerwelle (12) und/oder der weiteren Messerwelle (50), sodass sich mehrere Rundmesser (14, 52) in axialer Flucht zumindest abschnittsweise überlappen, in einen Betriebszustand überführt wird, dem Schritt J) folgt.
